# EUROPÄISCHE PATENTSCHRIFT

(11) **EP 0 813 570 B1**
(45) Veröffentlichungstag und Bekanntmachung des Hinweises auf die Patenterteilung: **21.08.2002**
(21) Anmeldenummer: 96905831.2
(22) Anmeldetag: 01.03.1996
(51) Int. Cl.: C08K 5/521, C08L 83/04

(54) **KONDENSATIONSVERNETZENDE POLYSILOXANMASSEN UND EIN HERSTELLUNGSVERFAHREN**
CONDENSATION CROSS-LINKING POLYSILOXANE MASSES AND A PROCESS FOR PREPARING THE SAME
MASSES DE POLYSILOXANE RETICULEES PAR CONDENSATION ET LEUR PROCEDE DE PREPARATION

(30) Priorität: 03.03.1995 DE 19507416
(43) Veröffentlichungstag der Anmeldung: 29.12.1997
(73) Patentinhaber: GE Bayer Silicones GmbH & Co. KG, 40699 Erkrath (DE)
(72) Erfinder: FRIEBE, Robert, D-51373 Leverkusen (DE); WEBER, Wilhelm, D-51373 Leverkusen (DE); SOCKEL, Karl-Heinz, D-51373 Leverkusen (DE)
(86) Internationale Anmeldenummer: EP9600837
(87) Internationale Veröffentlichungsnummer: WO96027636

(56) Entgegenhaltungen:
- EP-A- 0 246 651
- EP-A- 0 608 888
- DE-A- 2 305 270
- FR-A- 2 415 132

## Beschreibung

Die vorliegende Erfindung betrifft kondensationsvernetzende, lagerstabile Polysiloxanmassen, enthaltend mindestens ein vernetzungsfähiges Polysiloxan, mindestens einen basischen Füllstoff, mindestens eine Phosphorverbindung, mindestens einen Alkoxysilanvernetzer, mindestens eine metallorganische Verbindung und gegebenenfalls weitere Hilfsstoffe, ein Verfahren zu deren Herstellung sowie deren Verwendung, oberflächenmodifizierte Füllstoffe und deren Verwendung.

Die erfindungsgemäßen Polysiloxanmassen, im folgenden RTV-1 (Raumtemperatur vulkanisierende 1 Komponenten) Alkoxysysteme genannt, sind unter Ausschluß von Feuchtigkeit lagerfähige Massen, die unter Zutritt von Luftfeuchtigkeit und unter Abspaltung von Alkoholen zu Elastomeren aushärten.

Produkte dieser Art wurden schon vor langer Zeit beschrieben und sind für den Einsatz als Dichtstoffe im Markt etabliert. Aus US-A-3 294 739, US-A 3 161 614 und US-A-3 494 951 ist die Herstellung solcher Massen aus OH- oder Alkoxy terminierten Polysiloxanen, gegebenenfalls unreaktiven Polysiloxanweichmachern, Alkoxysilanvernetzern, Katalysatoren, Füllstoffen und gegebenenfalls weiteren Hilfsstoffen, bekannt.

Durch die Verwendung von Füllstoffen können die Materialkosten von RTV-1 Massen deutlich gesenkt werden. Die Füllstoffe dienen aber nicht nur zur Verbilligung der Massen, sondern beeinflussen maßgeblich die Eigenschaften der RTV-1 Alkoxy Systeme. Die Konzentration und die Zusammensetzung der verwendeten Füllstoffe ist entscheidend für die rheologischen Eigenschaften der unvulkanisierten Massen, wie Standfestigkeit und Fließverhalten. Weiterhin sind sie wesentlich für die mechanischen Eigenschaften der ausgehärteten Vulkanisate, wie Reißfestigkeit, Bruchdehnung und Elastizitätsmodul. Für RTV-1 Massen werden als Füllstoffe beispielsweise sehr häufig Kreiden verwendet. Gemahlene Naturkreide wird in der Regel zusammen mit pyrogener Kieselsäure eingesetzt. Die Kieselsäure ist in dieser Kombination erforderlich, wenn standfeste Massen enthalten werden sollen. Als Alternative können gefällte Kreiden verwendet werden. Diese Kreiden können ebenfalls mit Kieselsäure und auch mit Naturkreide kombiniert werden. Sie ergeben aber bei ausreichender Konzentration auch ohne Kieselsäure genügend standfeste Massen. Diese zeichnen sich durch hohe Reißfestigkeit und Bruchdehnung sowie gute Haftung aus und sind daher für die typischen Anwendungen im RTV-1 Bereich, beispielsweise als Dichtstoffe, sehr gut geeignet.

Die Verwendung von Füllstoffen in RTV-1 Massen, insbesondere beim Einsatz in höheren Konzentrationen, kann zu einem starken Viskositätsanstieg führen. Die hohe Viskosität kann Schwierigkeiten bei der Herstellung der Massen bereiten, aber auch ihre Verarbeitung beeinträchtigen. Außerdem steigt bei hohen Füllgraden der Elastizitätsmodul der ausgehärteten Dichtstoffe an und die Bruchdehnung wird verkürzt. Gerade die Verwendung gefällter Kreiden kann zu sehr hohen Elastizitätsmodulen führen, die für den Einsatz der RTV-1 Alkoxy Systeme als Dichtstoffe unerwünscht sind. Ein weiterer Nachteil, der sich aus der Verwendung der Füllstoffe, beispielsweise der Kreiden und insbesondere der gefällten Kreiden in RTV-1 Alkoxy Systemen ergeben kann, ist eine verminderte Lagerfähigkeit der unvulkanisierten Pasten. Lagert man RTV-1 Produkte unter Ausschluß von Luftfeuchtigkeit und entnimmt von Zeit zu Zeit Proben, kann in Abhängigkeit von der Lagerzeit die Vernetzungsfähigkeit abnehmen. Die Massen verändern sich bis hin zum völligen Ausbleiben der Vernetzung unter Zutritt von Luftfeuchtigkeit. RTV-1 Alkoxy Systeme, weisen generell kürzere Lagerfähigkeit auf als andere RTV-1 Massen, so daß diese deswegen nur begrenzt einsetzbar sind.

Es sind einige Additive für verschiedene Vernetzungssysteme zur Verbesserung der rheologischen Eigenschaften hochgefüllter RTV-1 Polysiloxanmassen bekannt. Über den rheologischen Einfluß und die Veränderung der Einarbeitbarkeit von Füllstoffen hinaus verändern sie auch die mechanischen Eigenschaften der Vulkanisate. In der Regel senken sie den Elastizitätsmodul. Durch den Zusatz solcher Hilfsstoffe können jedoch weitere wichtige Eigenschaften der Produkte beeinflußt werden. So kann beispielsweise eine Verkürzung der Lagerfähigkeit der unvulkanisierten Massen oder aber auch eine Verschlechterung der Hafteigenschaften auftreten.

Als geeignete Additve sind aus EP-A-314313 und EP-A-314314 Sulfonsäuren bekannt, insbesondere die Dodecylbenzolsulfonsäure bzw. ihre Salze. Diese sulfonsäurehaltigen RTV 1 Alkoxy Systeme weisen niedrige Elastizitätsmodule der Vulkanisate auf, jedoch ist die Lagerfähigkeit der unvulkanisierten Produkte, die ohne den Zusatz der Sulfonsäure relativ gering ist, bei Zugabe der Dodecylbenzolsulfonsäure nicht verbessert.

In DE-A-2007002 werden veretherte oder veresterte Polyglycole in gefüllten kondensationsvernetzenden Polysiloxanmassen verwendet. Diese Produkte werden unter Verwendung verschiedener Silanvernetzer mit mindestens einem Stickstoffatom im Molekül hergestellt, wie z.B. Oximo-, Amino- oder Aminoxysilanvernetzern. In DE-A-2 653 499 werden Phosphorsäureester in Kombination mit den gleichen Vernetzern beschrieben. Geeignete Additive für Alkoxysysteme, die ein niedriges Elastizitätsmodul und eine gute Lagerfähigkeit aufweisen, sind nicht bekannt.

Es bestand also die Aufgabe, gefüllte RTV-1 Alkoxy Systeme zu entwickeln, die ein niedriges Elastizitätsmodul und eine hohe Bruchdehnung besitzen und die im unvulkanisierten Zustand eine gute Lagerfähigkeit aufweisen. Zudem sollten diese über eine gute Haftung des gehärteten Materials auf vielen Substraten verfügen.

Überraschenderweise wurde nun herausgefunden, daß die bekannten Nachteile hochgefüllter Polysiloxanmassen, die bei Raumtemperatur unter dem Zutritt von Luftfeuchtigkeit härten und die als Spaltprodukte Alkohole freisetzen, weitestgehend behoben werden können, wenn den Massen als Additive Phosphorsäureester und/oder Polyphosphorsäureester zugesetzt werden. Durch diese Additive werden sowohl die mechanischen Vulkanisateigenschaften der RTV-1 Alkoxy-Systeme als auch ihre Lageufähigkeit im unvulkanisierten Zustand nachhaltig verbessert werden.

Gegenstand der Erfindung sind lagerstabile, kondensationsvernetzende Polysiloxanmassen, enthaltend
a) mindestens ein vernetzungsfähiges Polysiloxan, das endständig als reaktionsfähigen Rest mindestens eine der folgenden Gruppen enthält

   -O-SiR¹ ₂OH, -O-SiR¹(OR²)₂, -O-Si(OR²)₃,

   wobei
   - R¹: gegebenenfalls substituierte C₁-C₈-Alkyl-, C₆-C₁₄-Aryl- oder C₂-C₈-Alkenylreste und
   - R²: gegebenenfalls substituierte lineare oder verzweigte C₁-C₈-Alkyl- oder C₂-C₈-Alkoxyalkylreste bedeuten,
   und
   R¹ und R² innerhalb des Moleküls gleich oder verschieden sein können,
b) mindestens einen basischen Füllstoff und gegebenenfalls weitere Füllstoffe,
c) mindestens eine Phosphorverbindung aus der Gruppe der Orthophosphorsäureester der folgenden Formel I

   O=P(OR³)₃₋ₙ(OH)ₙ

   mit
   - n =: 1 oder 2 und
   - R³ =: ein gegebenenfalls substituierter linearer oder verzweigter C₁-C₃₀-Alkyl-, -Acyl-, C₂-C₃₀-Alkenyl- oder -Alkoxyalkyl-, C₅-C₁₄-Cycloalkyl- oder C₆-C₁₀-Arylrest oder ein Triorganosilyl- oder Diorganoalkoxysilylrest, der innerhalb des Moleküls gleich oder verschieden sein kann,
   und/oder der Ester der Polyphosphorsäure,
d) mindestens ein Alkoxysilanvernetzer der Formel

   R¹ ₓ Si(OR²)₄₋ₓ,

   wobei
   x = 0 und 1, und R¹ und R² innerhalb des Moleküls gleich oder verschieden sein können,
e) mindestens eine metallorganische Verbindung, und
f) gegebenenfalls weitere Hilfsstoffe, wie z.B. Weichmacher, Haftmittel, Stabilisatoren, Pigmente, Fungizide u.a..

Vernetzungsfahige Polysiloxane a) im Sinne der Erfindung sind Polydiorganosiloxane, vorzugsweise Polydimethylsiloxane, wobei gegebenenfalls die Methylgruppen teilweise durch Vinyl-, Phenyl-, C₂- bis C₈-Alkyl- oder Halogenalkylgruppen ersetzt sein können. Die Polydimethylsiloxane sind im wesentlichen linear, können jedoch geringe Anteile an verzweigend wirkender Organosiloxyeinheiten enthalten. In einer bevorzugten Ausführungsform der vorliegenden Erfindung besitzt das vernetzungsfähige Polysiloxan a) eine Viskosität zwischen 0,1 und 1000 Pas, vorzugsweise zwischen 10 und 500 Pas. Zudem kann das vernetzungsfähige Polydiorganosiloxan a) partiell durch unreaktive Reste, wie beispielsweise Trimethylsiloxyreste, substituiert sein.

In einer bevorzugten Ausführungsform der vorliegenden Erfindung sind die reaktionsfähigen Reste der Polysiloxane

-O-Si(R¹)₂OH-Gruppen mit

- R¹ =: gegebenenfalls substituierter C₁-C₈-Alkyl-, C₆-C₁₄-Aryl- oder C₂-C₈-Alkenylrest, worin R¹ innerhalb des Moleküls gleich oder verschieden sein kann.

Der Begriff substituiert schließt alle gängigen Substituenten, wie z.B. Halogen, NO₂, Amin, Alkoxy etc. ein.

Die basischen Füllstoffe b) sind beispielsweise gefällte oder gemahlene Kreide, Metalloxide, -sulfate, -silicate, -hydroxide, -carbonate und -hydrogencarbonate. Weitere Füllstoffe sind z.B. verstärkende und nichtverstärkende Füllstoffe, wie z.B. pyrogene oder gefällte Kieselsäure, Ruß oder Quarzmehl. Sowohl die basischen Füllstoffe als auch die weiteren verstärkenden oder nichtverstärkenden Füllstoffe können gegebenenfalls oberflächenmodifiziert sein. Besonders bevorzugt sind als basische Füllstoffe b) gefällte oder gemahlene Kreiden. Bei Komponente b) kann es sich auch um Gemische von Füllstoffen handeln.

Die erfindungsgemäßen Phosphorverbindungen c) sind Ester der Ortho- und Polyphosphorsäure bzw. Gemische davon. Die Ester der Orthophosphorsäure werden durch die folgende allgemeine Formel beschrieben:

O=P(OR³)₃₋ₙ(OH)ₙ,

worin
- n =: 1 oder 2 und
- R³: die Bedeutung von einem gegebenenfalls substituierten linearen oder verzweigten C₁-C₃₀-Alkyl-, -Acyl-, C₂-C₃₀-Alkenyl- oder -Alkoxyalkyl-, C₅-C₁₄-Cycloalkyl- oder C₆-C₁₀-Arylrest oder ein Triorganosilyl- oder Diorganoalkoxysilylrest hat, und R³ innerhalb des Moleküls gleich oder verschieden sein kann.

In einer bevorzugten Ausführungsform der vorliegenden Erfindung ist die Phosphorverbindung c) ein Ester der Orthophosphorsäure der Formel I in der R³ mindestens einem gegebenenfalls substituierten linearen oder verzweigten C₄-C₃₀-Alkylrest entspricht. Für den Fall, daß n = O ist, entspricht R³ mindestens einem Triorganosilyl- oder Diorganosilylrest.

Beispiele für erfindungsgemäße Phosphorsäureester c) sind primäre und sekundäre Ester der Orthophosphorsäure sowie deren Gemische, wie Di-(2-ethylhexyl)-phosphat, Dihexadecylphosphat, Diisononylphosphat, Mono-isodecylphosphat, Mono-(2-ethylhexyl)-phosphat und Tris(trimethylsilylphosphat).

Komponente c) kann ebenfalls ein Ester von Polyphosphorsäure oder ein Gemisch aus mehreren Polyphosphorsäureestern sein. Geeignet sind ebenfalls Salze der Ortho- und Polyphosphorsäurepartialester, wie z.B. Alkalimetallsalze.

Silanvernetzer d) in den erfindungsgemäßen Polysiloxanmassen sind Alkoxysilane der allgemeinen Formel

R¹ ₓ Si(OR²)₄₋ₓ,

mit
- x =: 0 und 1,
- R¹: gegebenenfalls substituierte C₁-C₈-Alkyl-, C₆-C₁₄-Aryl- oder C₂-C₈-Alkenylreste und
- R²: gegebenenfalls substituierte C₁-C₈-Alkyl-, lineare oder verzweigte C₁-C₈-Alkyl- oder C₂-C₈-Alkoxyalkylreste, wobei R¹ und R² innerhalb des Moleküls gleich oder verschieden sein können,
oder deren Gemische.

Bevorzugte Alkoxysilane sind Tetraethoxysilan, Tetra-n-propoxysilan, Methyltriethoxysilan, Methyltrimethoxysilan, Methyltri-(2-methoxyethoxy)silan, Vinyltrimethoxysilan oder Vinyltriethoxysilan. Bevorzugt sind Methyl- und Vinyltrimethoxysilan. Komponente d) kann ebenfalls ein Teilhydrolysat der Alkoxysilanvernetzer sein.

Als metallorganische Verbindungen e) sind alle nach dem Stand der Technik in kondensationsvernetzenden Polysiloxanmassen gebräuchlichen Katalysatoren geeignet. Besonders bevorzugt sind organische Titan- und Zinnverbindungen. In Kombination mit organischen Zinnverbindungen werden bevorzugt vemetzungsfahige Polysiloxane a) mit den reaktionsfähigen Resten

-O-SiR¹(OR²)₂, -O-Si(OR²)₃

eingesetzt, wobei die Reste R¹ und R² die schon zuvor genannte Bedeutung haben. Besonders bevorzugte Zinnverbindungen sind z.B. Diorganozinndicarboxylate, wie Dibutylzinnlaurat und Dioctylzinnmaleat sowie Lösungen von Diorganozinnoxiden in Kieselsäureestern. Bevorzugte Titanverbindungen sind beispielsweise Alkyltitanate, wie Tetraisopropyltitanat, Tetrabutyltitanat und chelatisierte Titanverbindungen, wie Diisobutyl-bisacetessigsäureethylester-titanat, Diisopropylbis(acetylacetonat)titanat oder Diisopropylbis(ethylacetoacetat)titanat.

Zusatz- und Hilfsstoffe f) im Sinne der Erfindung sind vorzugsweise Weichmacher, Haftmittel, Pigmente und Fungizide.

In einer bevorzugten Ausführungsform der vorliegenden Erfindung sind die Hilfsstoffe f), Siliconweichmacher, wie z.B. Polydimethylsiloxane mit Trimethylsiloxyendgruppen und einer Viskosität von 0,1 bis 5 Pas, Haftmittel, wie z.B. organofunktionelle Silane der Formeln:

X-CH₂-CH₂-CH₂-Si(OR²)₃

mit X=

-NH-CH₂-CH₂-NH₂,

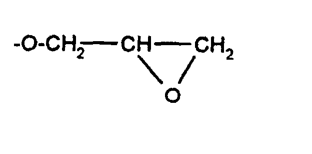

-O-C(O)-C(CH₃)=CH₂, -SH, -OH, -Cl, -NH₂

und

R² in der schon zuvor genannten Bedeutung.

Die erfindungsgemäßen Siliconmassen bestehen vorzugsweise aus
100 Gew.-Teilen a),
10 bis 250 Gew.-Teilen b),
0,1 bis 25 Gew.-Teilen c),
1 bis 30 Gew.-Teilen d)
0,1 bis 20 Gew.-Teilen e) sowie
0 bis 240 Gew.-Teilen f).

Die Summe der Hilfs- und Zusatzstoffe f) weist dabei vorzugsweise folgende Zusammensetzung auf:
0-100 Gew.-Teile Weichmacher,
0-20 Gew.-Teile Haftmittel,
0-100 Gew.-Teile Pigmente,
0-20 Gew.-Teile Fungizide,
wobei die Summe aller Komponenten f) in der Mischung höchstens 240 Gew-Teile ergibt.

Gegenstand der vorliegenden Erfindung ist auch ein Verfahren zur Herstellung der erfindungsgemäßen Polysiloxanmassen, wonach die Komponenten a) bis f) unter Ausschluß von Feuchtigkeit vermischt werden. Bevorzugt werden die Komponenten a), b) und c) vorgelegt und anschließend die weiteren Komponenten zudosiert.

Die erfindungsgemaßen Phosphorverbindungen c) werden vorzugsweise im Verlauf der Herstellung der Polysiloxanmassen in die Massen eingearbeitet. In einer besonders bevorzugten Ausfuhrungsform der vorliegenden Erfindung werden in einem vorgelagerten Arbeitsgung die basischen Füllstoffe b) und die Phosphorverbindung c) gegebenenfalls in einem geeigneten Lösungsmittel gelöst, vermischt. Als geeignete Lösungsmittel konnen z B. Wasser, polare oder apolare organische Lösungsmittel, beispielsweise Alkohole und aromatische oder aliphatische Kohlenwasserstoffe, Verwendung finden Gegenstand der vorliegenden Erfindung ist zudem die Verwendung der erfindungsgemäßen Polysiloxanmassen als Dichtstoff, Kleber oder Beschichtungsmaterial.

Gegenstand der Erfindung ist zudem die Verwendung der oberflächenmodifizierten Füllstoffe in Polysiloxanmassen, Kunststoffen, wie z.B. PVC, Thermoplasten, Kautschuk, Polysulfid-Dichtmassen, Polyurethanmassen, Farben oder Lacken.

Die folgenden Beispiele dienen der Erläuterung der Erfindung ohne jedoch begrenzend zu wirken.

### Beispiele

### Allgemeine Arbeitsweise bei der Herstellung und Beurteilung der Massen

Die Herstellung der Massen erfolgte in einem Il-Plantenmischer entsprechend den im folgenden aufgeführten Beispielen. Nach Abschluß der Herstellung wurden die Massen in Kunststoffkartuschen gefüllt. Aus den verschlossenen Kartuschen wurde Material für die entsprechenden weiteren Prüfungen entnommen.

Das Vernetzungsverhalten der Polysiloxanmassen wurde auf einer Glasplatte geprüft, wozu die Pasten in einer Schichtdicke von 2 mm auf einer Fläche von 40 mal 60 mm aufgetragen wurden. Nach 24 Stunden wurde die Durchhärtung des Material bis zur Glasoberfläche geprüft.

Zur Ermittlung der mechanischen Eigenschaften der Vulkanisate wurden die Pasten in 2 mm dicken Schichten ausgezogen und nach 14-tägiger Aushärtung bei 23°C und 50% relativer Luftfeuchtigkeit nach DIN 53 504 geprüft. Die Härte wurde nach 21 Tagen entsprechend DIN 53505 ermittelt.

Die Lagerfähigkeit der Produkte wurde so beurteilt, daß die Pasten in einer verschlossenen Aluminiumtube bei 50°C gelagert wurden. Im Wochenabstand wurden Proben entnommen und auf Vernetzung geprüft. Waren die Proben 1 Woche nach der Entnahme einwandfrei vernetzt, so galt der Test als bestanden. Die Prüfung der Lagerfähigkeit bei 50°C ist eine bei der Dichtstoffbeurteilung gebräuchliche Methode, die es ermöglicht, in relativ kurzen Zeiträumen die Lagerfähigkeit der Produkte in der Praxis abzuschätzen.

### Beispiele 1 bis 8

In einem Planetenmischer wurden 44,0 Gew.-Teile eines Polydimethylsiloxans mit Si(CH₃)₂OH-Endgruppen, das eine Viskosität von 50 Pas bei 25°C besaß, mit 45,0 Gew.-Teilen einer mit Stearinsäure behandelten gefällten Kreide (spezifische Oberfläche BET 19 m²/g) unter Zusatz verschiedener Phosphorsäureester zu einer homogenen Paste vermischt. Es fanden folgende Verbindungen Einsatz:
- Beispiel 1:: Di-2-ethylhexylphosphat
- Beispiel 2:: Mono-2-ethylhexylphosphat
- Beispiel 3:: Mono-isodecylphosphat
- Beispiel 4: 1:1: Gemisch aus Mono- und Di-isononylphosphat
- Beispiel 5:: Trimethylsilyl-di-2-ethylhexylphosphat
- Beispiel 6:: Trimethylsilyl-di-2-ethylhexylphosphat
- Beispiel 7:: Bis-(trimethylsilyl)-mono-2-ethylhexylphosphat
- Beispiel 8:: Tris-(trimethylsilyl)phosphat.

Anschließend wurden 8,0 Gew.-Teile eines Polydimethylsiloxans mit -OSi(CH₃)₃-Endgruppen und 2,5 Gew.-Teile Methyltrimethoxysilan untergerührt und die Paste durch Zugabe von 1,0 Gew.-Teilen Diisobutyl-bisacetessigsäureethylester-titanat sowie 0,1 Gew.-Teilen N-Amino-ethyl-3-aminopropyltrimethoxysilan vervollständigt.

Die Massen der Beispiele 1 bis 8 härteten innerhalb von 24 Stunden einwandfrei bis zur Glasplatte durch. Die weiteren Eigenschaften der Massen können Tabelle 1. entnommen werden.

### Vergleichsbeispiel 9

Der Ansatz der Beispiele 1 bis 8 wurde wiederholt, wobei auf eine Zugabe des Phosphorsäureesters verzichtet wurde. Auch diese Masse war nach 24 Stunden vollständig durchgehärtet. Die Prüfung der Lagerfähigkeit und der mechanischen Eigenschaften zeigte jedoch, daß das Produkt nur unzureichende Eigenschaften aufweist. Die Lagerfähigkeit von nur 2 Wochen bei 50°C und die schlechten mechanischen Eigenschaften wie hohe Härte, niedrige Dehnung und hoher E-Modul schränken die Einsatzmöglichkeit eines solchen Produktes aufgrund der technischen Nachteile sehr stark ein.

### Vergleichsbeispiel 10

Der Ansatz des Beispiels 9 wurde unter Zugabe von 1,5 Gew.-Teilen Dodecylbenzolsulfonsäure wiederholt. Der Dichtstoff härtete nach 24 Stunden vollständig durch. Die Lagerfähigkeit des Produktes unterscheidet sich nicht von der des Vergleichsbeispieles 5 ohne jeglichen Zusatz und ist mit nur 2 Wochen bei 50°C nicht ausreichend. Die mechanischen Eigenschaften des Vulkanisates liegen auf hohem Niveau und weisen eine hohe Bruchdehnung und einen niedrigen E-Modul auf (Tabelle 1).

**Tabelle 1:**

| **Prüfergebnisse der Beispiele 1 bis 10** | | | | | | |
|---|---|---|---|---|---|---|
| Bsp.- Nr. | Gew.- Teile Phosphat | Härte Shore A | Bruchdehnung [%] | E-Modul [N/mm²] | Reißfestigkeit [N/mm²] | Lagerstabilität¹⁾ bei 50°C [Wochen] |
| 1 | 1,5 | 28 | 880 | 0,49 | 2,0 | 4 |
| 2 | 1,0 | 17 | 820 | 0,41 | 1,7 | 10 |
| 3 | 1,1 | 23 | 780 | 0,45 | 1,7 | 10 |
| 4 | 1,3 | 23 | 780 | 0,46 | 1,8 | 10 |
| 5 | 1,0 | 33 | 630 | 0,63 | 2,0 | 6 |
| 6 | 1,25 | 31 | 930 | 0,50 | 2,34 | 6 |
| 7 | 1,0 | 28 | 830 | 0,50 | 2,11 | 14 |
| 8 | 1,0 | 30 | 500 | 0,45 | 1,99 | 14 |
| 9²⁾ | - | 35 | 640 | 0,67 | 2,6 | 2³⁾ |
| 10²⁾ | 1,5⁴⁾ | 24 | 930 | 0,44 | 2,0 | 2³⁾ |

| | | | | | | |
|---|---|---|---|---|---|---|
| 1) nach der angegebenen Zeit waren die Produkte noch in einwandfreiem Zustand | | | | | | |
| 2) Vergleichsbeispiel | | | | | | |
| 3) Masse härtet nach 3 Wochen nicht mehr aus. Das Produkt ist deutlich geschädigt | | | | | | |
| 4) Dodecylbenzolsulfonsäure | | | | | | |

## Patentansprüche

1. Lagerstabile Kondensationsvernetzende Polysiloxanmassen, enthaltend
a) mindestens ein vernetzungsfähiges Polysiloxan, das endständig als reaktionsfähigen Rest mindestens eine der 'folgenden Gruppen enthalt
-O-SiR¹ ₂OH, -O-SiR¹(OR²)₂, -O-Si(OR²)₃,
wobei
R¹ gegebenenfalls substituierte C₁-C₈-Alkyl-, C₆-C₁₄-Aryl- oder C₂-C₈-Alkenylreste und
R² gegebenenfalls substituierte lineare oder verzweigte C₁-C₈-Alkyl- oder C₂-C₈-Alkoxyalkylreste bedeuten, und R¹ und R² innerhalb des Moleküls gleich oder verschieden sein können,
b) mindestens einen basischen Füllstoff und gegebenenfalls weitere Füllstoffe,
c) mindestens eine Phosphorverbindung aus der Gruppe der Orthophosphorsäureesters der folgenden Formel I
O=P(OR³)₃₋ₙ(OH)ₙ
mit
n = 1 oder 2 und
R³ = ein gegebenenfalls substituierter linearer oder verzweigter C₁-C₃₀-Alkyl-, -Acyl-, C₂-C₃₀-Alkenyl- oder -Alkoxyalkyl-, C₅-C₁₄-Cycloalkyl- oder C₆-C₁₂-Arylrest oder ein Triorganosilyl- oder Diorganoalkoxysilylrest, der innerhalb des Moleküls gleich oder verschieden sein kann,
und/oder eines Esters der Polyphosphorsäure,
d) mindestens ein Alkoxysilanvernetzer der Formel
R¹ ₓ Si(OR²)₄₋ₓ,
mit
x = 0 und 1,
R¹ und R² innerhalb des Moleküls gleich oder verschieden sein können,
bedeuten,
e) mindestens eine metallorganische Verbindung und
f) gegebenenfalls weitere Hilfsstoffe.

2. Lagerstabile Kondensationsvernetzende Polysiloxanmassen nach Anspruch 1, **dadurch gekennzeichnet, daß** das vernetzungsfähige Polysiloxan a) eine Viskosität zwischen 0,1 und 1000 Pas besitzt.

3. Lagerstabile Kondensationsvernetzende Polysiloxanmassen nach einem der Ansprüche 1 bis 2, **dadurch gekennzeichnet, daß** die basischen Füllstoffe b) gefällte oder gemahlene Kreiden sind.

4. Lagerstabile Kondensationsvernetzende Polysiloxanmassen nach einem der Ansprüche 1 bis 3, **dadurch gekennzeichnet, daß** die Phosphorverbindung c) ein Ester der Orthophosphorsäure mit mindestens einem gegebenenfalls substituierten linearen oder verzweigten C₄-C₃₀-Alkylrest R³ ist.

5. Lagerstabile Kondensationsvernetzende Polysiloxanmassen nach einem der Ansprüche 1 bis 4, **dadurch gekennzeichnet, daß** der Alkoxysilanvernetzer d) Tetraethoxysilan, Tetra-n-propoxysilan, Methyltriethoxysilan, Methyltrimethoxysilan, Methyltri-(2-methoxyethoxy)silan, Vinyltrimethoxysilan oder Vinyltriethoxysilan ist.

6. Lagerstabile kondensationsvernetzende Polysiloxanmassen nach den Ansprüchen 1 bis 5, **dadurch gekennzeichnet, daß** die metallorganische Verbindung e) eine organische Titan- oder Zinnverbindung ist.

7. Lagerstabile Kondensationsvernetzende Polysiloxanmassen nach den Ansprüchen 1 bis 6, **dadurch gekennzeichnet, daß** die Hilfsstoffe f) Weichmacher, Katalysatoren, Haftmittel, Pigmente, Fungizide sind.

8. Lagerstabile Kondensationsvernetzende Polysiloxanmassen nach den Ansprüchen 1 bis 7, **dadurch gekennzeichnet, daß** diese aus
100 Gew.-Teilen a),
10 bis 250 Gew.-Teilen b),
0,1 bis 25 Gew.-Teilen c),
1 bis 30 Gew.-Teilen d),
0,1 bis 20 Gew.-Teilen e) sowie
0 bis 240 Gew.-Teilen f) bestehen.

9. Lagerstabile Kondensationsvernetzende Polysiloxanmassen nach den Ansprüchen 1 bis 7, **dadurch gekennzeichnet, daß** der Hilfsstoff f) folgende Zusammensetzung aufweist:
0-100 Gew.-Teile Weichmacher,
0-20 Gew.-Teile Haftmittel,
0-100 Gew.-Teile Pigmente,
0-20 Gew.-Teile Fungizide,
wobei die Summe aller Komponenten f) in der Mischung höchstens 240 Gew.-Teile ergibt.

10. Verfahren zur Herstellung der Lagerstabilen kondensationsvernetzenden Polysiloxanmassen nach den Ansprüchen 1 bis 9, **dadurch gekennzeichnet, daß** in einem vorgelagerten Arbeitsgang die basischen Füllstoffe b) und die Phosphorverbindung c), gegebenenfalls in einem Lösungsmittel gelöst, vermischt werden.

11. Verwendung der Lagerstabilen kondensationsvernetzenden Polysiloxanmassen nach den Ansprüchen 1 bis 9 als Dichtstoff, Kleber oder Beschichtungsmasse.

## Claims

1. Storage-stable condensation-crosslinking polysiloxane compositions containing
a) at least one crosslinkable polysiloxane containing as terminal reactive radical at least one of the following groups:
-O-SiR¹ ₂OH, -O-SiR¹(OR²)₂, -O-Si(OR²)₃,
where
R¹ denotes optionally substituted C₁-C₈-alkyl, C₆-C₁₄-aryl or C₂-C₈-alkenyl radicals and
R² denotes optionally substituted linear or branched C₁-C₈-alkyl or C₂-C₈-alkoxyalkyl radicals, and R¹ and R² can be the same or different within the molecule,
b) at least one basic filler and optionally further fillers,
c) at least one phosphorus compound from the group of the orthophosphoric esters of the following formula I:
O=P(OR³)₃₋ₙ(OH)ₙ
where
n = 1 or 2 and
R³ = an optionally substituted linear or branched C₁-C₃₀-alkyl, -acyl, C₂-C₃₀-alkenyl or -alkoxyalkyl, C₅-C₁₄-cycloalkyl or C₆-C₁₂-aryl radical or a triorganosilyl or diorganoalkoxysilyl radical which can be the same or different within the molecule,
and/or an ester of polyphosphoric acid,
d) at least one alkoxysilane crosslinker of the formula
R¹ ₓSi(OR²)₄₋ₓ
where
x = 0 or 1,
R¹ and R² can be the same or different within the molecule,
e) at least one organometallic compound and
f) optionally further, auxiliary materials.

2. Storage-stable condensation-crosslinking polysiloxane compositions according to Claim 1, **characterized in that** the crosslinkable polysiloxane a) has a viscosity between 0.1 and 1000 Pas.

3. Storage-stable condensation-crosslinking polysiloxane compositions according to either of Claims 1 and 2, **characterized in that** the basic fillers b) are precipitated or ground chalks.

4. Storage-stable condensation-crosslinking polysiloxane compositions according to any of Claims 1 to 3, **characterized in that** the phosphorus compound c) is an ester of orthophosphoric acid with at least one optionally substituted linear or branched C₄-C₃₀-alkyl radical R³.

5. Storage-stable condensation-crosslinking polysiloxane compositions according to any of Claims 1 to 4, **characterized in that** the alkoxysilane crosslinker d) is tetraethoxysilane, tetra-n-propoxysilane, methyltriethoxysilane, methyltrimethoxysilane, methyltri(2-methoxyethoxy)-silane, vinyltrimethoxysilane or vinyltriethoxysilane.

6. Storage-stable condensation-crosslinking polysiloxane compositions according to Claims 1 to 5, **characterized in that** the organometallic compound e) is an organic titanium or tin compound.

7. Storage-stable condensation-crosslinking polysiloxane compositions according to Claims 1 to 6, **characterized in that** the auxiliary materials f) are plasticizers, catalysts, coupling agents, pigments, fungicides.

8. Storage-stable condensation-crosslinking polysiloxane compositions according to Claims 1 to 7, **characterized in that** they consist of
100 parts by weight of a),
10 to 250 parts by weight of b),
0.1 to 25 parts by weight of c),
1 to 30 parts by weight of d),
0.1 to 20 parts by weight of e) and
0 to 240 parts by weight of f).

9. Storage-stable condensation-crosslinking polysiloxane compositions according to Claims 1 to 7, **characterized in that** the auxiliary material f) has the following composition:
0-100 parts by weight of plasticizer,
0-20 parts by weight of coupling agents,
0-100 parts by weight of pigments,
0-20 parts by weight of fungicides,
the sum total of all the components f) in the mixture being not more than 240 parts by weight.

10. Process for preparing the storage-stable condensation-crosslinking polysiloxane compositions according to Claims 1 to 9, **characterized in that** the basic fillers b) and the phosphorus compound c), optionally dissolved in a solvent, are mixed in a preceding operation.

11. Use of the storage-stable condensation-crosslinking polysiloxane compositions according to Claims 1 to 9 as a sealant, as an adhesive or as a coating.

## Revendications

1. Masses de polysiloxanes à réticulation par condensation stockables, contenant
a) au moins un polysiloxane réticulable qui contient aux extrémités comme reste réactif au moins l'un des groupes suivants
-O-SiR¹ ₂OH, -O-SiR¹(OR²)₂, -O-Si(OR²)₃,
où
R¹ représente des restes alkyle en C₁-C₈, aryle en C₆-C₁₄ ou alcényle en C₂-C₈ éventuellement substitués et
R² représente des restes alkyle en C₁-C₈ ou alcoxyalkyle en C₂-C₈ linéaires ou ramifiés éventuellement substitués, et R¹ et R² peuvent être identiques ou différents à l'intérieur de la molécule,
b) au moins une charge basique et éventuellement d'autres charges,
c) au moins un composé du phosphore du groupe des esters de l'acide orthophosphorique de formule I suivante
O=P(OR³)₃₋ₙ(OH)ₙ
avec
n = 1 ou 2 et
R³ = un reste alkyle en C₁-C₃₀, acyle en C₁-C₃₀, alcényle en C₂-C₃₀ ou alcoxyalkyle en C₂-C₃₀ linéaire ou ramifié, cycloalkyle en C₅-C₁₄ ou aryle en C₆-C₁₂ éventuellement substitué, ou un reste triorganosilyle ou diorganoalcoxysilyle qui peut être identique ou différent à l'intérieur de la molécule,
et/ou un ester de l'acide polyphosphorique,
d) au moins un réticulant alcoxysilane de formule
R¹ ₓSi(OR²)₄₋ₓ,
avec
x = 0 ou 1,
R¹ et R² peuvent être identiques ou différents à l'intérieur de la molécule,
e) au moins un composé organométallique et
f) éventuellement d'autres adjuvants.

2. Masses de polysiloxanes à réticulation par condensation stockables selon la revendication 1, **caractérisées en ce que** le polysiloxane réticulable a) possède une viscosité de 0,1 à 1 000 Pa.s.

3. Masses de polysiloxanes à réticulation par condensation stockables selon l'une des revendications 1 à 2, **caractérisées en ce que** les charges basiques b) sont des craies précipitées ou broyées.

4. Masses de polysiloxanes à réticulation par condensation stockables selon l'une des revendications 1 à 3, **caractérisées en ce que** le composé du phosphore c) est un ester de l'acide orthophosphorique avec au moins un reste alkyle en C₄-C₃₀ linéaire ou ramifié éventuellement substitué R³.

5. Masses de polysiloxanes à réticulation par condensation stockables selon l'une des revendications 1 à 4, **caractérisées en ce que** le réticulant alcoxysilane d) est le tétraéthoxysilane, le tétra-n-propoxysilane, le méthyltriéthoxysilane, le méthyltriméthoxysilane, le méthyltri-(2-méthoxyéthoxy)silane, le vinyltriméthoxysilane ou le vinyltriéthoxysilane.

6. Masses de polysiloxanes à réticulation par condensation stockables selon les revendications 1 à 5, **caractérisées en ce que** le composé organométallique e) est un composé organique du titane ou de l'étain.

7. Masses de polysiloxanes à réticulation par condensation stockables selon les revendications 1 à 6, **caractérisées en ce que** les adjuvants f) sont des plastifiants, des catalyseurs, des agents d'adhésivité, des pigments, des fongicides.

8. Masses de polysiloxanes à réticulation par condensation stockables selon les revendications 1 à 7, **caractérisées en ce qu'**elles consistent en
100 parties en masse de a),
10 à 250 parties en masse de b),
0,1 à 25 parties en masse de c),
1 à 30 parties en masse de d),
0,1 à 20 parties en masse de e) ainsi que
0 à 240 parties en masse de f).

9. Masses de polysiloxanes à réticulation par condensation stockables selon les revendications 1 à 7, **caractérisées en ce que** l'adjuvant f) présente la composition suivante :
0-100 parties en masse de plastifiants,
0-20 parties en masse d'agents d'adhésivité,
0-100 parties en masse de pigments,
0-20 parties en masse de fongicides,
où la somme de tous les composants f) dans le mélange donne au plus 240 parties en masse.

10. Procédé de préparation des masses de polysiloxanes à réticulation par condensation stockables selon les revendications 1 à 9, **caractérisé en ce que**, dans une étape préalable, les charges basiques b) et le composé du phosphore c) sont mélangés, éventuellement dissous dans un solvant.

11. Utilisation des masses de polysiloxanes à réticulation par condensation stockables selon les revendications 1 à 9 comme matériau d'étanchéité, adhésif ou masse de revêtement.
